# FASCICULE DE BREVET EUROPEEN

(11) **EP 3 411 458 B1**
(45) Date de publication et mention de la délivrance du brevet: **13.11.2019**
(21) Numéro de dépôt: 17702115.1
(22) Date de dépôt: 01.02.2017
(51) Int. Cl.: C10B 47/34, C10L 5/44, C10L 9/08, F28D 7/08, F28D 7/00

(54) **FOUR A SOLES MULTIPLES POUR UTILISATION A BASSE TEMPERATURE**
OFEN MIT MEHREREN REGALBÖDEN ZUR VERWENDUNG BEI NIEDRIGER TEMPERATUR
MULTI-SHELF FURNACE FOR USE AT LOW TEMPERATURE

(30) Priorité: 05.02.2016 BE 201605095
(43) Date de publication de la demande: 12.12.2018
(73) Titulaire: Cockerill Maintenance & Ingéniérie S.A., 4100 Seraing (BE); Commissariat à l'Energie Atomique et aux Energies Alternatives (CEA), 75015 Paris (FR)
(72) Inventeur: GASPARD, Daniel, 4577 Modave (BE); PRIAROLLO, Joseph, 4100 Boncelles (BE); COTTENIER, Gauthier, 4050 Chaudfontaine (BE); MELKIOR, Thierry, 38360 Sassenage (FR); MEMPONTEIL, Alain, 38600 Fontaine (FR)
(74) Mandataire: Pronovem
(86) Numéro de dépôt international: PCT/EP2017/052101
(87) Numéro de publication internationale: WO 2017/134075

(56) Documents cités:
- FR-A1- 2 574 810
- GB-A- 479 977
- KR-B1- 101 487 188
- US-A1- 2016 017 235

## Description

### Objet de l'invention

La présente invention se rapporte au domaine technique des réacteurs thermiques industriels pour transformation à basse température de matières solides ou liquides. On entend par basse température une température convenant pour le procédé de torréfaction de biomasse, typiquement inférieure à 300°-350°C.

Elle s'adresse en particulier aux fournisseurs de biomasse combustible désireux de concentrer et stabiliser leur produit avant expédition, aux utilisateurs de biomasse combustible désireux de remplacer le charbon par un combustible vert, aux producteurs de boues industrielles ou de station d'épuration désireux de les stabiliser et de les concentrer avant leur expédition, ou encore d'améliorer l'exploitation de leur procédé.

### Arrière-plan technologique et état de la technique

Dans le domaine de l'énergie, la notion de biomasse regroupe l'ensemble des matières organiques pouvant devenir des sources d'énergie. Ces matières organiques qui proviennent des plantes sont une forme de stockage de l'énergie solaire captée par les plantes. Elles peuvent être utilisées soit directement (bois énergie), soit après une méthanisation de la matière organique (biogaz), soit après de nouvelles transformations chimiques (biocarburant).

On entend par torréfaction un traitement thermique de la biomasse à 350°C maximum, généralement en quasi absence d'oxygène et parfois sous balayage inerte, qui permet de concentrer l'énergie dans le matériau et de rendre ce dernier plus cassant et donc plus facilement broyable. La torréfaction de biomasse est un procédé tout à fait analogue à la torréfaction de café. Cependant, dans le cas de la torréfaction du bois, la problématique de la fluidité de l'entraînement de la matière dans le procédé est beaucoup plus aiguë, du fait que les grains de café se présentent sous une forme idéale de bille.

On connaît, à l'heure actuelle, des installations de torréfaction de type industriel qui, dans une première phase, comprennent un prétraitement thermique sous forme d'un séchage poussé effectué pour ajuster l'humidité de la biomasse. Ce prétraitement libère de l'eau, en ce compris l'eau liée, qui est à l'origine du retrait du bois. Le bois séché comporte de 10 à 15% d'humidité en surface et environ 20% à coeur. Dans une seconde phase, on fragilise la biomasse par un traitement thermique doux, qui est la torréfaction proprement dite, en l'absence d'air, et qui sera suivie d'un broyage permettant d'ajuster la granulométrie à la valeur désirée. Dans cette étape, on « dégrade » les lignines, les celluloses et les hémicelluloses du bois. Les réseaux polymères de lignine sont réarrangés ; ce phénomène apparaissant à partir de 160°C confère au bois un caractère hydrophobe. Le bois torréfié a ainsi son équilibre hygroscopique aux alentours de 3%.

On connaît ainsi des procédés de torréfaction de la biomasse en vue d'en faire un combustible amélioré, qui font appel à des technologies de type four rotatif, four à étage, four tunnel saturé en liquide ou en vapeur, four à vis ou lit fluidisé.

Les fours à soles multiples actuels constituent une technologie mature. Ces fours à disposition verticale, fonctionnent sous pression atmosphérique, dans une gamme de température allant de 250 à 1050°C et avec une surface de réaction ayant une capacité allant par exemple jusqu'à 550 m². Ils présentent aussi l'avantage de brasser continuellement le produit. Ils sont utilisés dans le domaine de l'environnement (pyrolyse de déchets solides, régénération de charbon et transformation de biomasse) et des matières premières (calcination et recristallisation de minerais industriels ainsi que pyrométallurgie).

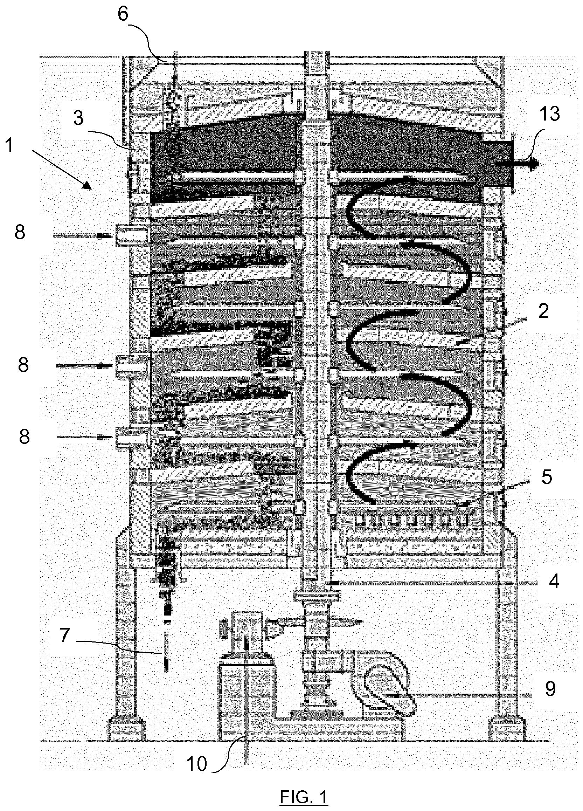

La figure 1 représente schématiquement un four à soles multiples 1, également appelé ci-après four MHF (pour *multiple hearth furnace*), selon l'état de la technique. Celui-ci peut par exemple se présenter sous la forme d'une série de soles ou plaques de cuisson 2 circulaires, disposées parallèlement les unes au-dessus des autres dans une enveloppe d'acier 3 tapissée de réfractaire. Un arbre rotatif vertical 4 disposé selon l'axe du four porte des bras munis de râbles 5, c'est-à-dire des outils en forme de rateau, qui brassent la charge alimentant le four à son extrémité supérieure 6 et qui la déplacent à travers chaque sole 2 selon un chemin en spirale. La matière se déplace dans deux soles contiguës dans des directions opposées (respectivement vers le centre et vers l'extérieur du four et vice versa). Pour ce faire les soles 2 successives sont munies d'orifices respectivement situés à proximité de l'arbre vertical et de l'extrémité diamétrale des soles. La biomasse ou la charge en général est fournie au niveau de la sole supérieure et râblée pour passer à travers celle-ci par les orifices précités débouchant sur la sole immédiatement inférieure, et ainsi de suite. Elle passe donc de cette manière sur et à travers chaque sole 2 vers le bas de l'installation 7 où le produit est déchargé. Des gaz chauds 13, par exemple des fumées de combustion, circulant généralement à contre-courant de la charge, portent le four à la température désirée et provoquent la ou les réactions souhaitées de traitement thermique (séchage poussé, torréfaction, etc.) de la charge. La chaleur est donc produite par la combustion soit de constituants de la charge elle-même, soit de carburant auxiliaire. Par exemple, des brûleurs à combustible liquide 8 peuvent être pourvus au travers de l'enveloppe extérieure au niveau de certaines des soles. On peut également injecter dans le four de la vapeur d'eau pour en améliorer le contrôle. L'installation fonctionne généralement sous atmosphère contrôlée et comporte des moyens de contrôle de la température et du temps de séjour de la charge dans le four. L'alimentation en charge peut être adaptée en continu de manière à maintenir constante l'épaisseur du lit râblé à l'intérieur du four.

Ce type de four, pouvant atteindre des températures de l'ordre de 1000°C, comporte en général des quantités importantes de réfractaire appuyées sur l'enveloppe extérieure. Ces dernières sont généralement constituées de briques assemblées dans des structures autoportantes dites en chapeau chinois, connues de l'homme de métier. L'épaisseur de réfractaire est typiquement de 10 à 30 cm. De plus, l'arbre central du four doit être refroidi par un dispositif 9 connu de l'homme de métier.

Le document WO/2012007574 A1 divulgue un four à soles multiples qui prévoit de réinjecter les gaz de pyrolyse incinérés directement sur le produit, et prétend séparer physiquement (par des mécanismes d'avancée produit, les gaz générés) la zone de séchage de la zone de torréfaction.

Le document US/20130098751 A1 divulgue un four vertical constitué pour moitié d'un four à plateau et pour moitié d'un four à axe vertical (*vertical shaft kiln*) et qui fonctionne sous pression (min 3 bars). Il y a exposition directe du produit à un gaz chaud.

Le document US 8,276,289 B2 divulgue un four à plateaux tournants (avec racleur fixe). Le produit est chauffé directement par l'injection de gaz chauds dans le réacteur.

Le document US 2013/0228443 A1 divulgue un four à plateaux tournants sur lequel le produit est séché puis torréfié grâce à un contact direct avec des gaz de pyrolyse incinérés.

Le document US 4,702,694 A décrit un four MHF à soles creuses qui chauffent le produit par pyrolyse indirecte mais ces soles sont chauffées intérieurement de manière classique par des fumées de combustion d'un fuel.

Le document CN104048516 A décrit un four vertical à vis sans fin.

L'utilisation du four à soles multiples de conception habituelle dans l'art antérieur (avec ses brûleurs, ses réfractaires, ses pièces coulées, ...) présente trop d'inertie thermique de par la quantité de réfractaire présente, est trop cher et est consommateur d'énergie fossile, ce qui le rend mal dimensionné et peu respectueux de l'environnement, surtout pour une utilisation dans un traitement thermique à basse température (< 350°C).

Le document FR 2 574 810 A1 divulgue un réacteur à soles multiples et un procédé de traitement thermique de matériaux organiques carbonés dans des conditions de pression et de température contrôlées. Le réacteur comprend un récipient sous pression contenant notamment une série de soles annulaires inférieures superposées définissant une zone de réaction. Le réacteur comporte à son sommet un orifice d'admission pour l'introduction du matériau sous pression qui est transféré par des bras de raclage en étant dirigé alternativement vers l'intérieur et vers l'extérieur, et qui descend en cascade pour traverser la zone de préchauffage et la zone de réaction. Le produit de réaction amélioré est extrait du fond alors que l'eau résiduelle et le gaz produit sont extraits du sommet de la zone de préchauffage. Les gaz de réaction chauds produits dans la zone de réaction passent à contre-courant de manière à effectuer un préchauffage du matériau dans la zone de préchauffage et la libération et l'extraction de son humidité.

Le document US 2016/0017235 A1 divulgue un procédé de traitement d'une charge d'alimentation de déchets à l'aide d'un gazéificateur ainsi que le gazéificateur pour la mise en œuvre du procédé. Un gaz d'échappement chaud provenant d'un moteur traverse une série de plaques chauffantes creuses empilées verticalement à l'intérieur d'un réacteur de gazéification avec des espaces entre chaque ensemble de plaques chauffantes successives formant des zones de réaction. Chaque zone de réaction est divisée en une zone de traitement supérieure et une zone de traitement inférieure par un disque rotatif. Les déchets se déplacent à partir d'un point d'alimentation externe le long de la surface supérieure du disque rotatif, radialement vers l'intérieur dans une zone de dépose située sur la partie radialement la plus interne, d'où elle tombe sur la surface supérieure de la plaque chauffante creuse en dessous. Le matériau de déchet est ensuite acheminé radialement vers l'extérieur dans une gouttière vers la zone de réaction suivante, ou bien une fois entièrement traité, à une sortie du réacteur. Les vapeurs de la matière de déchet sont aspirées dans chaque zone de réaction à travers un orifice de sortie pour un traitement ultérieur.

### Buts de l'invention

La présente invention vise à la transformation de déchets ou de biomasse à basse température, réalisée dans un four à soles multiples conçu pour abaisser au mieux l'investissement en capital (Capex) et l'investissement d'exploitation (Opex), tout en conservant les atouts opérationnels du MHF.

### Principaux éléments caractéristiques de l'invention

La présente invention se rapporte à un four à soles multiples pour un traitement thermique à une température n'excédant pas 350°C, comprenant une entrée supérieure de matière à traiter thermiquement, une sortie inférieure de matière traitée, un arbre central tournant, un dispositif de chauffage de la matière à traiter thermiquement, une enveloppe extérieure à laquelle sont fixées une pluralité de soles, au moins un bras de râblage pourvu de dents de râblage au-dessus de chaque sole, mis en rotation par l'arbre central tournant, lesdites soles présentant alternativement et respectivement une ouverture de déchargement de matière proximale de l'arbre et une ouverture de déchargement de matière distale de l'arbre, de manière à conférer à la matière à traiter un cheminement en spirale selon la hauteur du four, les soles étant constituées de disques plats fixés à l'enveloppe externe, les bras de râblage étant fixés à des modules mécano-soudés constituant l'arbre central, les dents de râblage étant soudées à leur bras de râblage respectif, tous ces éléments étant réalisés en tôle, c'est-à-dire à partir de feuilles ou plaques métalliques, ledit four à soles multiples étant caractérisé en ce que le dispositif de chauffage précité comporte un échangeur de chaleur radiant sous forme d'une structure d'échange de chaleur plate comportant des canalisations de fluide thermique, solidarisé à la face de chaque sole n'étant pas en contact avec la matière à traiter, et en ce que la structure d'échange de chaleur plate comportant des canalisations de fluide thermique comprend un ensemble de canalisations individuelles réalisées en tubes d'une seule pièce pliés sous forme de petites sections en forme de secteurs.

Selon des formes d'exécution préférées de l'invention, le four à soles multiples comporte en outre au moins une des caractéristiques suivantes, ou une combinaison appropriée de celles-ci :
- la matière métallique est de l'acier inoxydable ;
- les fixations sont démontables, ce qui est avantageux en fonction de la maintenance ;
- les deux types précités de soles, selon la position de leur ouverture de déchargement de matière, comprennent des tôles ou plaques métalliques en forme de secteurs, boulonnés ou soudés les uns aux autres pour former une structure plate en forme de disque, posées sur des bras, en métal également fixés à l'enveloppe externe ;
- les bras de râblage ont assemblés à chaque étage à l'arbre central tournant, en étant séparés de proche en proche par un angle déterminé et constant ;
- d'un étage à l'autre, les bras de râblage sont décalés d'un angle déterminé constant ;
- chaque bras de râblage se présente sous la forme d'une poutre ou d'un profilé métallique à dents droites parallèles entre elles et perpendiculaires au bras, mais formant avec l'axe de celui-ci un angle différent de 90° ;
- deux étages consécutifs de bras de râblage sont assemblés sur un élément modulaire de l'arbre central du four, ledit élément modulaire présentant des logements, par exemple à section rectangulaire où sont boulonnés les bras des râblage, différents modules d'arbre central étant connectés verticalement, par exemple emboîtés, entre eux ;
- les deux types de soles ont des structures d'échange de chaleur avec des formes de secteurs respectives différentes du fait que l'orifice circulaire de la sole pour le passage de la charge et des gaz est soit central, soit périphérique ;
- les assemblages de secteurs sont clippés au dos des soles sur la surface qui n'est pas en contact avec la charge ;

Le four à soles multiples selon la présente invention peut être par exemple utilisé dans un procédé de séchage et de de torréfaction de bois à une température inférieure à 350°C, caractérisé au moins par les étapes suivantes :
- le bois est découpé dans une cisaille incorporée ou non à l'installation,
- le bois découpé est séché dans un sécheur,
- le bois découpé et séché est pyrolysé ou torréfié dans le four à soles multiples précité,
- la matière sortant du four à soles multiples est réduite en « chips » dans un broyeur et une presse pour obtenir un pellet,
- le pellet est brûlé dans une chaudière à combustible solide produisant en sortie des fumées et de la vapeur alimentant un groupe turbine/alternateur,
- de l'énergie est récupérée par le sécheur,
- les fumées en sortie de la chaudière passent dans un échangeur de chaleur qui porte à une température prédéterminée un fluide thermique qui va chauffer le four à soles multiples,
- un gaz de pyrolyse généré par le four à soles multiples est également injecté comme carburant dans la chaudière.

Le four à soles multiples selon l'invention peut également être utilisé avantageusement en partie pour effectuer le séchage de la matière à traiter ou même pour faire exclusivement du séchage.

### Brève description des figures

La figure 1, déjà mentionnée, représente schématiquement un four à soles multiples selon l'état de la technique.
Les figures 2A et 2B représentent des vues d'ensemble intérieures d'un exemple de forme d'exécution du four à soles multiples selon la présente invention.
La figure 3 représente schématiquement une forme d'exécution de procédé de torréfaction utilisant un four à soles multiples selon la présente invention.
La figure 4 représente une vue de l'enveloppe extérieure du four selon les figures 2A et 2B.
Les figures 5A montrent respectivement une vue externe en élévation et une vue en coupe du four précité.
Les figures 5B montrent des vues en plan de deux soles contiguës du four précité.
Les figures 6 représentent plusieurs vues des bras de râblage, selon un montage sur l'arbre tournant du four précité.
Les figures 7 montrent différentes vues d'un bras de râblage individuel.
La figure 8 montre l'un des éléments modulaires de l'arbre tournant du four précité.
Les figures 9 montrent des exemples d'échangeurs de chaleur à huile thermique spécialement adaptés aux deux types de soles respectives.

### Description de formes d'exécution préférées de l'invention

La présente invention propose un four à soles multiples, appelé «MHF 100/0» (pour 100% métallique, 0% de fuel injecté), particulièrement adapté au traitement thermique à basse température, en particulier à la torréfaction et/ou au séchage de déchets ou de biomasse, essentiellement par :
- le remplacement des composants de la mécanique de râblage par un ensemble mécano-soudé et non refroidi ;
- le remplacement des réfractaires internes par du calorifugeage externe standard ;
- le remplacement des soles en chapeau chinois par des soles métalliques plates ;
- le remplacement des brûleurs à combustible fossile par des tubulures radiantes à huile thermique, fixées sous les soles ;
- le remplacement du carburant fossile par une source de puissance fatale, via par exemple un simple échangeur fumées de combustion/huile thermique.

Avantageusement, la majeure partie des composants métalliques pour la réalisation d'un tel four seront des composants en inox standard que l'on peut trouver aisément dans le commerce.

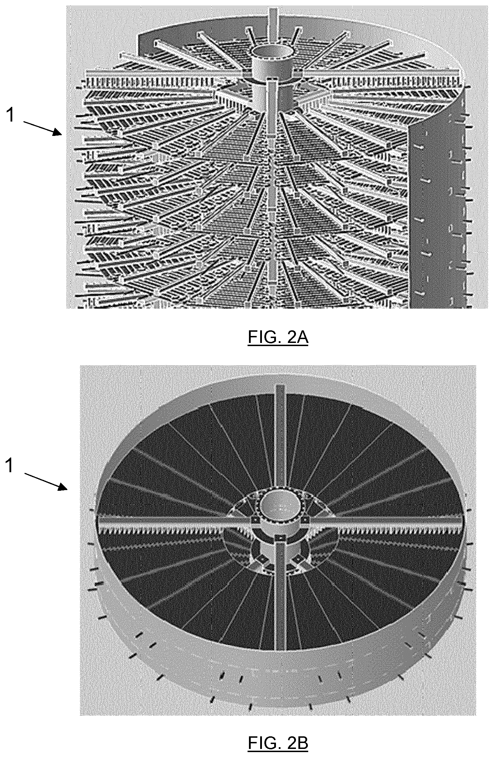

Un exemple d'un tel four est représenté en vue d'ensemble sur les figures 2A et 2B.

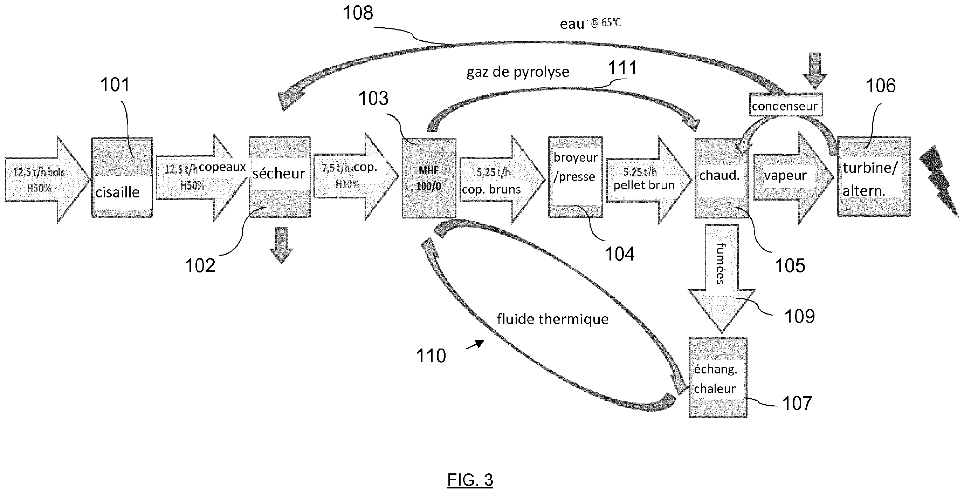

La figure 3 représente un exemple de procédé de torréfaction utilisant un four à soles multiples selon la présente invention. Du bois, par exemple avec un taux d'humidité de 50%, est découpé dans une cisaille 101, séché dans un sécheur 102 et ensuite traité, c'est-à-dire pyrolysé ou torréfié, avec une humidité résiduelle de 10% par exemple dans le MHF 103. En sortie du MHF un broyeur et une presse 104 réduisent les « chips » obtenus en sortie du MHF en un pellet brun qui est brûlé dans une chaudière classique à combustible solide 105. Celle-ci produit de la vapeur alimentant un groupe turbine/alternateur 106. De l'eau de condensat 108 en sortie de chaudière peut être récupérée par le sécheur 102. Les fumées en sortie de la chaudière 109 passent dans un échangeur de chaleur 107 qui porte à la température adéquate l'huile thermique 110 qui va alimenter le four MHF 103. Le gaz de pyrolyse 111 généré par le MHF 103 peut également être injecté dans la chaudière 105.

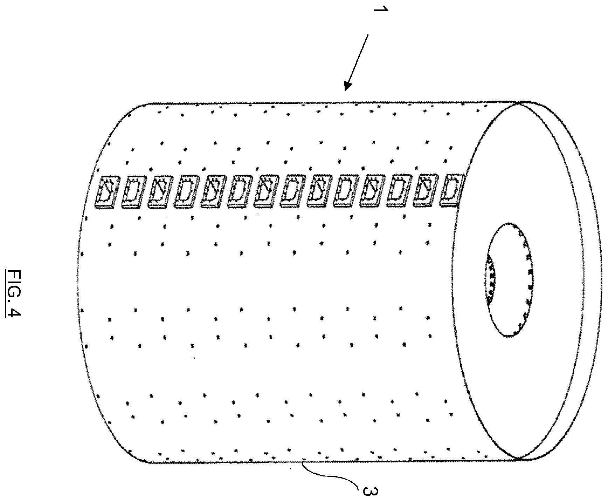

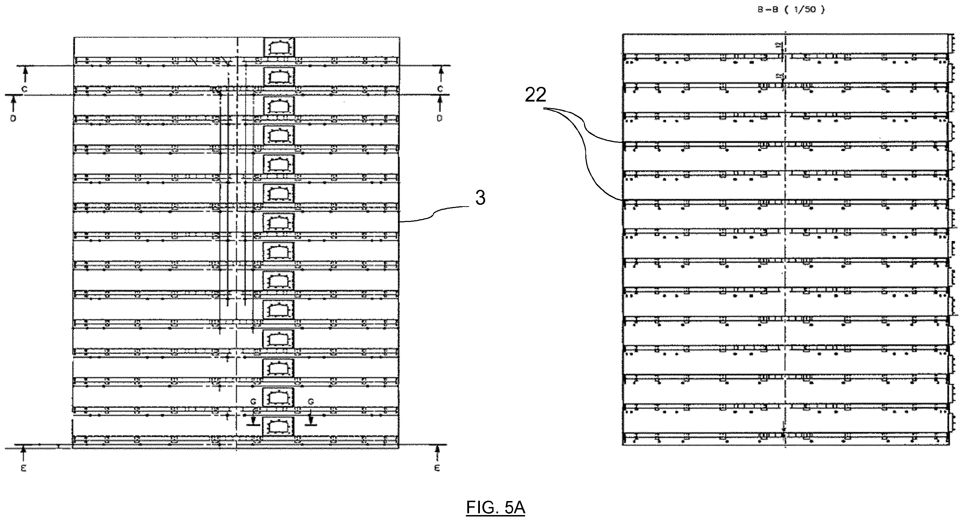

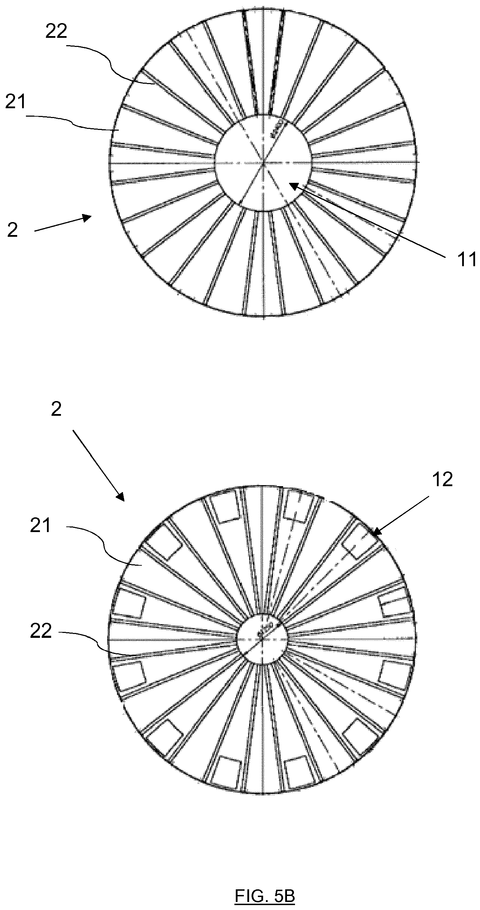

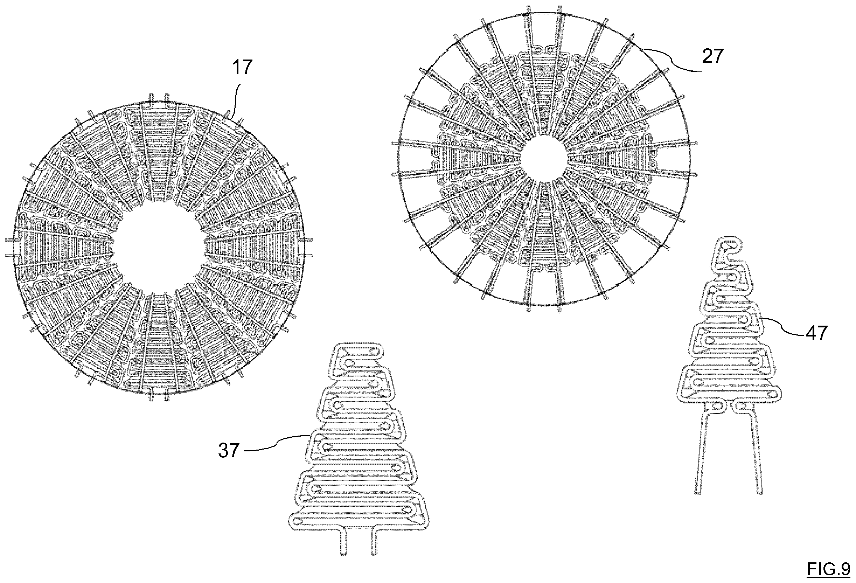

Selon une forme d'exécution préférée de l'invention, représentée sur les figures 4, 5A, 5B, 6, 7, 8 et 9, la plupart des constituants métalliques du four dont la température ne doit pas dépasser typiquement 400°C sont réalisés en un acier inox d'usage courant. Par exemple, l'enveloppe extérieure ou casing 3 du four peut être constituée d'un cylindre en tôle inox « 316 » (adapté aux milieux humides et corrosifs) d'une épaisseur de 1,5 cm par exemple. Les deux types de soles 2 sont également constitués de plaques de tôle inox de cette épaisseur ou non, en forme de secteurs 21, posées sur des bras 22, en inox également fixés au casing 3 (Figures 5A et 5B). Les soles 2 se présentent donc sous forme de disques plats. Vu la suppression de la masse de briques réfractaires, il n'y a en effet plus aucune raison de réaliser des soles autosupportées ayant la forme de chapeau chinois. Ici, on entend par secteur un secteur circulaire de disque, c'est-à-dire la surface délimitée par deux rayons et un arc de cercle.

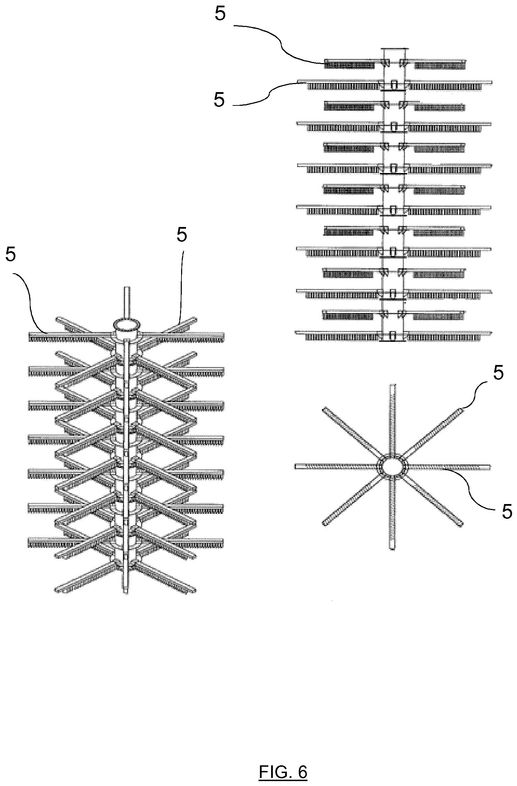

Comme représenté sur la figure 6, dans cette forme d'exécution particulière, les râbles 5, au nombre de 4 dans cet exemple non limitatif, sont assemblés à chaque étage, séparés de proche en proche par un angle de 90°. D'un étage à l'autre, les râbles 5 sont décalés de 45° (en quinconce). Avantageusement, les fixations des râbles et autres pièces métalliques sont réalisées par boulonnage, soudage, rivetage, agrafage, sertissage ou frettage. Pour les besoins de la maintenance, ces fixations seront en outre avantageusement démontables.

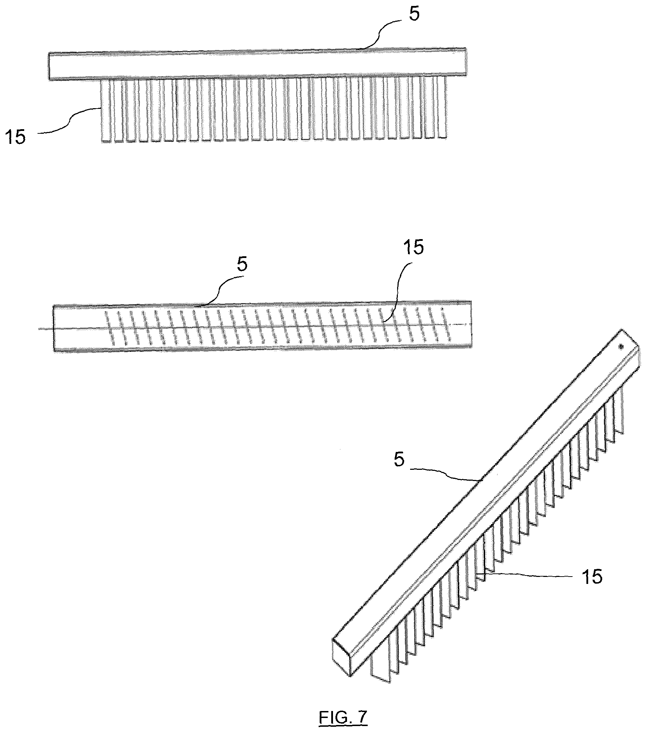

Comme représenté sur la figure 7, les râbles 5 se présentent sous la forme d'un bras en inox, par exemple un tube à section rectangulaire, pourvues de dents droites 15 parallèles entre elles et perpendiculaires au bras, mais formant avec l'axe de celui-ci un angle différent de 90°, choisi pour obtenir la meilleure efficacité de râblage possible.

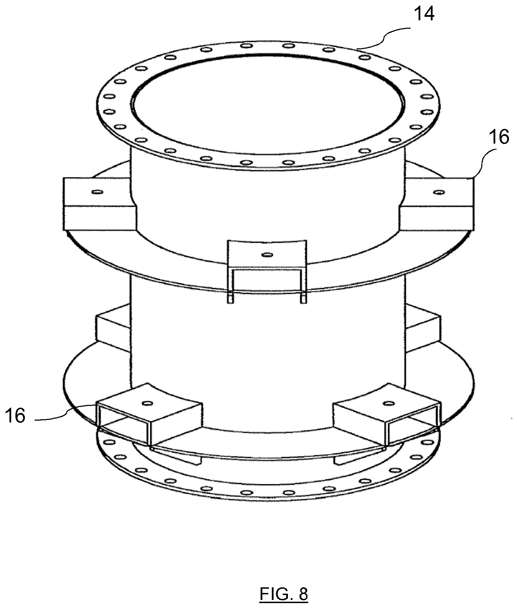

Deux étages consécutifs de râbles 5 seront assemblés sur un élément modulaire 14 de l'arbre central 4 du four, représenté sur la figure 8. Cet élément modulaire 14 présente des logements à section rectangulaire 16 où pourront être boulonnés les bras des râbles 5. De même les différents modules d'arbre 14 pourront être connectés verticalement, par exemple boulonnés ou emboîtés, entre eux. La maintenance est facilitée par le fait que tant les bras mécano-soudés cassés ou défectueux (boulonnés) que les dents de râblage usées (soudées) peuvent être démontés et remplacés aisément.

Selon une autre forme d'exécution de l'invention, les soles du four seront chauffées individuellement par des structures plates de canalisations d'huile thermique 17, 27 associées à la surface inférieure de chaque sole 2. La surface inférieure de la sole 2 sera couverte par un ensemble de canalisations individuelles réalisées de préférence en tubes d'une seule pièce pliés sous forme de petites sections telles que des secteurs 37, 47. Chaque élément de canalisation aura une largeur diminuant vers le centre du four (forme en « secteur ») conférant à cet élément la forme d'un « arbre de Noël ». Les deux types de soles 2 auront des échangeurs respectifs 17, 27 avec des formes différentes de secteurs 37, 47 du fait que l'orifice circulaire de la sole pour le passage de la charge et des gaz est soit central soit périphérique. Cet assemblage de l'échangeur en petites sections 37, 47 est avantageux pour le transport, l'installation et la maintenance des échangeurs. Ce système d'échangeur individuel par sole permet également un réglage fin de la température sole par sole par exemple en agissant sur le débit d'huile circulant dans les secteurs. Avantageusement encore, les assemblages de secteurs pourront être clippés au dos des soles (sur la surface non en contact avec la charge) de manière à permettre un démontage aisé de ces échangeurs.

### Avantages généraux de l'invention

Les avantages de l'invention sont les suivants :
- conservation totale du principe de régulation de température par sole, de façon à obtenir un profil thermique fin ;
- conservation totale du principe de conception modulaire propre au MHF : diamètre et nombre de soles adaptables à la capacité de traitement requise ;
- économies importantes dues à la diminution drastique du volume d'isolants et de réfractaires, au remplacement de grosses pièces d'acier coulées par des assemblages mécano-soudés et à la suppression du système de refroidissement par air et des brûleurs à combustible fossile ;
- inertie thermique fortement réduite ;
- résistance aux acides et à l'humidité par une sélection judicieuse d'acier inox ;
- facilité de nettoyage grâce à un environnement interne totalement métallique ;
- réduction de l'empreinte écologique vu que la génération de puissance thermique ne requiert pas de combustion de carburant fossile ;
- design compact, léger simplifié d'où temps de construction réduit ;
- pré-assemblage avant livraison d'où temps de montage encore réduit davantage ;
- pas de système de combustion d'où maintenance réduite ;
- maintenance aisément programmable du fait que l'aspect modulaire du four permet de petites réparations sans arrêt total de l'ensemble ;
- réduction du Capex estimée à 40-50%.

### Liste des symboles de référence

- 1: Four à soles multiples (MHF)
- 2: Sole en réfractaire ou en métal
- 3: Enveloppe extérieure
- 4: Arbre central
- 5: Bras de râblage
- 6: Entrée supérieure de la charge
- 7: Sortie inférieure de la charge
- 8: Brûleur à combustible fossile
- 9: Refroidissement de l'arbre central
- 10: Moteur de l'arbre central
- 11: Orifice central de déchargement de sole
- 12: Orifice extérieur de déchargement de sole
- 13: Gaz et fumées de combustion
- 14: Module mécano-soudé d'arbre central
- 15: Dent de râblage
- 16: Bride ou manchon d'arbre central pour bras de râblage
- 17: Echangeur de chaleur à huile pour sole à déchargement central
- 21: Secteur individuel de sole
- 22: Bras de support de sole
- 27: Echangeur de chaleur à huile pour sole à déchargement périphérique
- 37: Premier élément d'échangeur
- 47: Deuxième élément d'échangeur
- 101: Cisaille
- 102: Sécheur
- 103: MHF
- 104: Broyeur/presse
- 105: Chaudière
- 106: Turbine/alternateur
- 107: Echangeur de chaleur
- 108: Eau de condensat
- 109: Fumées en sortie de chaudière
- 110: Huile thermique
- 111: Gaz de pyrolyse

## Revendications

1. Four à soles multiples (1) pour un traitement thermique à une température n'excédant pas 350°C, comprenant une entrée supérieure (6) de matière à traiter thermiquement, une sortie inférieure de matière traitée (7), un arbre central tournant (4), un dispositif de chauffage (8, 17, 27) de la matière à traiter thermiquement, une enveloppe extérieure (3) à laquelle sont fixées une pluralité de soles (2), au moins un bras de râblage (5) pourvu de dents de râblage (15) au-dessus de chaque sole (2), mis en rotation par l'arbre central tournant (4), lesdites soles (2) présentant alternativement et respectivement une ouverture de déchargement de matière proximale de l'arbre (11) et une ouverture de déchargement de matière distale de l'arbre (12), de manière à conférer à la matière à traiter un cheminement en spirale selon la hauteur du four, les soles (2) étant constituées de disques plats fixés à l'enveloppe externe (3), les bras de râblage (5) étant fixés à des modules mécano-soudés (14) constituant l'arbre central (4), les dents de râblage (15) étant soudées à leur bras de râblage respectif (5), tous ces éléments étant réalisés à partir de feuilles ou plaques métalliques, ledit four à soles multiples (1) étant **caractérisé en ce que** le dispositif de chauffage précité comporte un échangeur de chaleur radiant sous forme d'une structure d'échange de chaleur plate pour le chauffage individuel de chaque sole (2) comportant des canalisations de fluide thermique (17, 27), solidarisé à la face de chaque sole (2) n'étant pas en contact avec la matière à traiter, et **en ce que** la structure d'échange de chaleur plate comportant des canalisations de fluide thermique (17, 27) comprend un ensemble de canalisations individuelles réalisées en tubes d'une seule pièce pliés sous forme de petites sections en forme de secteurs (37, 47).

2. Four à soles multiples (1) selon la revendication 1, **caractérisé en ce que** la matière métallique est de l'acier inoxydable.

3. Four à soles multiples (1) selon la revendication 1, **caractérisé en ce que** les fixations sont démontables.

4. Four à soles multiples selon la revendication 1, **caractérisé en ce que** les deux types précités de soles (2), selon la position de leur ouverture de déchargement de matière, comprennent des plaques métalliques en forme de secteurs (21), boulonnés ou soudés les uns aux autres pour former une structure plate en forme de disque, posées sur des bras (22), en métal, également fixés à l'enveloppe externe (3).

5. Four à soles multiples (1) selon la revendication 1, **caractérisé en ce que** les bras de râblage (5) sont assemblés à chaque étage à l'arbre central tournant (4), en étant séparés de proche en proche par un angle déterminé et constant.

6. Four à soles multiples selon la revendication 5, **caractérisé en ce que**, d'un étage à l'autre, les bras de râblage (5) sont décalés d'un angle déterminé constant.

7. Four à soles multiples (1) selon la revendication 1, **caractérisé en ce que** chaque bras de râblage (5) se présente sous la forme d'une poutre ou d'un profilé métallique à dents droites (15), parallèles entre elles et perpendiculaires au bras, mais formant avec l'axe de celui-ci un angle différent de 90°.

8. Four à soles multiples (1) selon la revendication 1, **caractérisé en ce que** deux étages consécutifs de bras de râblage (5) sont assemblés sur un élément modulaire (14) de l'arbre central (4) du four, ledit élément modulaire (14) présentant des logements, par exemple à section rectangulaire (16) où sont boulonnés les bras des râblage (5), différents modules d'arbre central (14) étant connectés verticalement, par exemple emboîtés, entre eux.

9. Four à soles multiples (1) selon la revendication 1, **caractérisé en ce que**, les deux types de soles (2) ont des structures d'échange de chaleur avec des formes de secteurs (37, 47) respectives différentes du fait que l'orifice circulaire de la sole (2) pour le passage de la charge et des gaz est soit central, soit périphérique.

10. Four à soles multiples (1) selon la revendication 8, **caractérisé en ce que** les assemblages de secteurs sont clippés au dos des soles (2) sur la surface qui n'est pas en contact avec la charge.

## Patentansprüche

1. Ofen mit mehreren Etagen (1) für eine thermische Behandlung bei einer Temperatur, die 350 °C nicht übersteigt, umfassend einen oberen Eingang (6) für das Material, das thermisch behandelt werden soll, einen unteren Ausgang für das behandelte Material (7), eine zentrale drehende Welle (4), eine Vorrichtung zum Heizen (8, 17, 27) des Materials, das thermisch behandelt werden soll, eine äußere Umhüllung (3), an der eine Vielzahl von Etagen (2) befestigt ist, mindestens einen Krählarm (5), der mit Krählzähnen (15) über jedem Etage (2) versehen ist und durch die zentrale drehende Welle (4) gedreht wird, wobei die Etagen (2) alternativ und jeweils eine Öffnung zur Entladung von Material, die proximal zur Welle ist (11), und eine Öffnung zur Entladung von Material, die distal zur Welle ist (12), aufweisen, um dem Material, das behandelt werden soll, einen spiralförmigen Weg entlang der Höhe des Ofens zuzuweisen, wobei die Etagen (2) aus flachen Scheiben bestehen, die an der äußeren Umhüllung (3) befestigt sind, wobei die Krählarme (5) an mechanisch geschweißten Modulen (14) befestigt sind, welche die zentrale Welle (4) bilden, wobei die Krählzähne (15) an ihrem entsprechenden Krählarm (5) angeschweißt sind, wobei alle diese Elemente aus metallischen Blättern oder Platten hergestellt sind, wobei der Ofen mit mehreren Etagen (1) **dadurch gekennzeichnet ist, dass** die oben angegebene Heizvorrichtung einen strahlenden Wärmetauscher in Form einer flachen Wärmetauscherstruktur zum individuellen Heizen jeder Etage (2) umfassend Kanalisierungen von Wärmefluid (17, 27) umfasst, welcher mit der Seite jeder Etage (2) fest verbunden ist, die nicht mit dem Material, das behandelt werden soll, in Kontakt steht, und dadurch, dass die flache Wärmetauscherstruktur, welche die Kanalisierungen von Wärmefluid (17, 27) umfasst, eine Anordnung von individuellen Kanalisierungen umfasst, die in Rohren aus einem einzigen Stück hergestellt sind, die in Form von kleinen sektorenförmigen Abschnitten (37, 47) gefaltet sind.

2. Ofen mit mehreren Etagen (1) nach Anspruch 1, **dadurch gekennzeichnet, dass** das metallische Material rostfreier Stahl ist.

3. Ofen mit mehreren Etagen (1) nach Anspruch 1, **dadurch gekennzeichnet, dass** die Befestigungen abmontierbar sind.

4. Ofen mit mehreren Etagen nach Anspruch 1, **dadurch gekennzeichnet, dass** die zwei oben angegebenen Arten von Etagen (2), gemäß der Position ihrer Öffnung zur Entladung von Material, metallische Platten in Form von Sektoren (21), die miteinander verbolzt oder verschweißt sind, um eine flache, scheibenförmige Struktur zu bilden, umfassen, wobei die metallischen Platten auf metallischen Armen (22) liegen, die ebenfalls an der äußeren Umhüllung (3) befestigt sind.

5. Ofen mit mehreren Etagen (1) nach Anspruch 1, **dadurch gekennzeichnet, dass** die Krählarme (5) an jeder Stufe an der zentralen drehenden Welle (4) befestigt sind und gleichzeitig von einer Stufe zur anderen durch einen bestimmten und konstanten Winkel getrennt sind.

6. Ofen mit mehreren Etagen (1) nach Anspruch 5, **dadurch gekennzeichnet, dass** von einer Stufe zur anderen die Krählarme (5) um einen bestimmten konstanten Winkel versetzt sind.

7. Ofen mit mehreren Etagen (1) nach Anspruch 1, **dadurch gekennzeichnet, dass** jeder Krählarm (5) die Form eines Balkens oder eines metallischen Profils mit geraden Zähnen (15) aufweist, die zueinander parallel und zum Arm senkrecht sind, jedoch mit der Achse desselben einen Winkel anders als 90°·aufweisen.

8. Ofen mit mehreren Etagen (1) nach Anspruch 1, **dadurch gekennzeichnet, dass** zwei aufeinanderfolgende Stufen von Krählarmen (5) auf einem modularen Element (14) der zentralen Welle (4) des Ofens montiert sind, wobei das modulare Element (14) Aussparungen aufweist, z. B. mit rechtwinkligem Schnitt (16), wo die Krählarme (5) verbolzt sind, wobei verschiedene Module der zentralen Welle (14) vertikal miteinander verbunden sind, z. B. ineinander eingefügt.

9. Ofen mit mehreren Etagen (1) nach Anspruch 1, **dadurch gekennzeichnet, dass** die zwei Arten von Etagen (2) Wärmetauscherstrukturen mit jeweils verschiedenen Formen von Sektoren (37, 47) aufweisen, aufgrund der Tatsache, dass die kreisförmige Öffnung der Etage (2) für den Durchgang der Ladung und der Gase entweder zentral oder peripher ist.

10. Ofen mit mehreren Etagen (1) nach Anspruch 8, **dadurch gekennzeichnet, dass** die Sektorenverbindungen auf der Hinterseite der Etagen (2) auf der Oberfläche, die nicht mit der Ladung in Kontakt ist, geklemmt sind.

## Claims

1. A multiple hearth furnace (1) for thermal treatment at a temperature not exceeding 350°C, comprising an upper inlet (6) for material to be thermally treated, a lower outlet for treated material (7), a rotating central shaft (4), a heating device (8, 17, 27) for the material to be thermally treated, an outer casing (3) to which a plurality of hearths (2) are fastened, at least one rabble arm (5) provided with rabble tines (15) above each hearth (2), rotated by the rotating central shaft (4), said hearths (2) alternately and respectively having a material unloading opening proximal to the shaft (11) and a material unloading opening distal to the shaft (12), so as to give the material to be treated a spiral path along the height of the furnace, the hearths (2) being made up of flat discs fastened to the outer casing (3), the rabble arms (5) being fastened to mechanically welded modules (14) making up the central shaft (4), the rabble tines (15) being welded to their respective rabble arms (5), all of these elements being made from metal sheets or plates, said multiple hearth furnace (1) being **characterized in that** the aforementioned heating device comprises a radiant heat exchanger in the form of a flat heat exchange structure for the individual heating of each hearth (2) comprising thermal fluid ducts (17, 27), secured to the face of each hearth (2) not being in contact with the material to be treated, and **in that** the flat heat exchange structure comprising thermal fluid ducts (17, 27) comprises a set of individual ducts made from tubes in a single piece bent in the form of small sections in sector (37, 47) form.

2. The multiple hearth furnace (1) according to claim 1, **characterized in that** the metal material is stainless steel.

3. The multiple hearth furnace (1) according to claim 1, **characterized in that** the fasteners can be disassembled.

4. The multiple hearth furnace (1) according to claim 1, **characterized in that** the two aforementioned types of hearths (2), depending on the position of their material unloading opening, comprise metal plates in the form of sectors (21), bolted or welded to one another to form a flat disc-forming structure, placed on arms (22), made from metal, also fastened to the outer casing (3).

5. The multiple hearth furnace (1) according to claim 1, **characterized in that** the rabble arms (5) are assembled at each stage to the rotating central shaft (4), while being separated from one to the next by a determined and constant angle.

6. The multiple hearth furnace according to claim 5, **characterized in that** from one stage to another, the rabble arms (5) are offset by a constant determined angle.

7. The multiple hearth furnace (1) according to claim 1, **characterized in that** each rabble arm (5) assumes the form of a beam or a metal profile with straight tines (15), parallel to one another and perpendicular to the arm, but forming, with the axis thereof, an angle different from 90°.

8. The multiple hearth furnace (1) according to claim 1, **characterized in that** two consecutive stages of rabble arms (5) are assembled on a modular element (14) of the central shaft (4) of the furnace, said modular element (14) having housings, for example with a rectangular section (16) where the rabble arms (5) are bolted, different central shaft modules (14) being vertically connected, for example fitted, to one another.

9. The multiple hearth furnace (1) according to claim 1, **characterized in that** the two types of hearths (2) have heat exchange structures with different respective sector (37, 47) forms because the circular orifice of the hearth (2) for the passage of the load and gases is either central or peripheral.

10. The multiple hearth furnace (1) according to claim 8, **characterized in that** the assemblies of sectors are clipped to the back of the hearths (2) on the surface that is not in contact with the load.
